# EUROPEAN PATENT SPECIFICATION

(11) **EP 3 690 645 B1**
(45) Date of publication and mention of the grant of the patent: **26.10.2022**
(21) Application number: 19155013.6
(22) Date of filing: 01.02.2019
(51) Int. Cl.: G09G 5/38, G06F 3/14, G06F 9/451

(54) **ADAPTION OF A MULTI-MONITOR SETUP FOR A MEDICAL APPLICATION**
ANPASSUNG EINER MEHRFACHMONITOREINRICHTUNG FÜR EINE MEDIZINISCHE ANWENDUNG
ADAPTATION D'UNE CONFIGURATION MULTI-MONITEURS POUR UNE APPLICATION MÉDICALE

(43) Date of publication of application: 05.08.2020
(73) Proprietor: Siemens Healthcare GmbH, 91052 Erlangen (DE)
(72) Inventor: Charrad, Chiheb, 91077 Neunkirchen A. Brand (DE); Dominick, Lutz, 91330 Eggolsheim (DE)

(56) References cited:
- US-A1- 2005 068 252
- US-A1- 2012 284 631
- US-A1- 2014 351 721
- US-A1- 2016 085 430

## Description

The present invention relates to the transfer between different monitor setups for medical applications. For example, if a medical application is used within a multi-monitor setup, it is not possible to simply transfer the application to a larger monitor hardware (e.g. to a high resolution, large scale monitor). To the contrary, the implementation of the application itself has to be changed, which leads to high effort.

Further, it has to be considered that specifically in the medical domain high quality requirements for the monitor hardware for visualization of data have to be met. In particular, medical imaging data may for example serve as a basis for medical diagnosis. Therefore, monitor hardware has to fulfil specific requirements so that e.g. size and resolution of the monitor hardware is appropriate for displaying the images and application windows correctly so that predefined legal and regulatory standards and requirements are met. If it may not be assured that these requirements are met, the application may not be applied in a standard conform manner and will be disallowed.

US 2014/351721 A1 describes a method for transferring a window from one display device to another display device, under control of an operating system by taking into account user settings and without considering requirements of the application.

US 2005/0068252 A1 describes a method for an operating system using a mixed monitor display having a first display of a first resolution and a second display of a second resolution different than the first resolution.

US 2012/0284631 A1 describes a method for generating computer user interfaces, in particular, for generating computer user interfaces for multiple form factors.

US 2016/0085430 A1 describes techniques for configuring devices to adapt the elements of the user interface of an application based on both the properties of the interaction components of the device (e.g., input components, output components, processing components, and network capacity), and the interaction criteria of the user interaction of the user with the application (e.g., the content of the user interface element, the input precision providing an adequate interaction with the element of the user interface, and the context in which the user is likely to utilize the user interface).

Thus, there is a need in state of the art to provide mechanisms which safeguard the quality requirements for clinical applications which are to be used dynamically in different monitor setups after deployment of the application.

Therefore, it is an object of the present invention to provide a tool which makes sure that the technical requirements for the monitor hardware for visualization of graphical user interface elements for a medical application are met. In particular, if the application should be used in different monitor setups or is to be transferred between different monitor setups a tool should be provided, which preserves user interface layout while safeguarding clinical requirements.

This object is achieved by the independent claims. Advantageous features and embodiments are mentioned in the dependent claims and in the description.

According to a first aspect, the invention relates to a method for automatically adapting or "morphing" a set of graphical user interface elements (like windows, controls, e.g. for tables, window panels, frames, images or image segments) for a medical application (e.g. a viewing or rendering application), wherein the set of graphical user interface elements was generated for a source monitor setup and should now be applied in a different, namely in a target monitor setup. The target monitor setup and the source monitor setup refer to a setup of at least one physical monitor which is addressed by an application to visualize the graphical user interface elements of the application. The transfer or change between the source monitor setup to the target monitor set of the application should be executable even during runtime and/or after deployment of the application. The method comprises the steps:
- Detecting physical device properties of the target monitor setup (e.g. size and number of target monitor(s), resolution for diagnostic quality of medical application, size and color scheme, medical form factor, aspect ratio, orientation, scaling etc.);
- Receiving requirements (like medical quality, resolution, space, number of required monitors for the application, orientation, minimal size, color, depth, types of windows, content per window element etc....) of the application; the requirements may for instance be received by reading a configuration file with configuration properties for a monitor setup;
- Checking if detected physical device properties of the target monitor setup is appropriate for the received requirements and if yes:
   - Adapting the set of graphical user interface elements (the "original" elements which have been created for the source monitor setup) to create an adapted set of graphical user interface elements for the target monitor setup by generating a runtime instance of a virtual monitor component for each monitor or for each application in the source monitor setup (so that each monitor in the source monitor setup may be simulated by a dedicated virtual component). The virtual monitor component acts as intercepting window in the target monitor setup so that each of the physical monitors of the source monitor setup is mapped to a virtual monitor component. Generating the virtual monitor component comprises calculating an adapted set of configuration properties executed by re-setting or newly setting or overriding previous values, which are used for displaying the adapted graphical user interface elements in the target monitor setup. Further, the method is reversible so that in reply to a reverse signal the target monitor setup is automatically transferred back into the source monitor setup.

This computer implemented method and approach has the technical advantage that an application which was deployed for a multi-monitor environment or hardware may easily be transferred to an environment with e.g. one large scale, high resolution monitor without drawbacks in quality (e.g. to ensure high resolution) and without changes in user interface (shortly: UI) layout although a different (more) monitor space is to be used. The adaption is achieved automatically so that the user is not obliged and forced to manually resize application windows and set window resolutions. In contrast to state of the art systems, the settings of the monitor need not to be adapted manually. In this respect it has to be mentioned that there is a high risk of manually changing pre-set UI parameters because usually a set of application windows is to be displayed and manual resizing of only one single window may distort the UI layout and lead to a breach of regulatory and/or legal requirements. This is why, typically, in state of the art medical applications, manual "resizing" is disallowed by default. The state of the art application implementation logic is typically bound and based on a dedicated monitor setup (1, 2 or 4 monitors with respective resolution and size parameters). Therefore, for change of the UI layout only very limited and dedicated functions are available so that the vendor of the application may control the correctness of the UI layouts for the intended monitor hardware. However, if nevertheless another monitor hardware should be used for an already deployed application, problems do arise, which may be addressed by the proposed solution. For example, if a 4-monitor application should be used in a larger scale single monitor environment, the space for displaying UI elements becomes bigger and leads to problems, because the 'old' setup distorts quality requirements as e.g. UI design typically start at the corners and in the 'new' setting or setup there is far too much space inside the UI if no technical adaption mechanism according to the proposed suggestion is provided. The created adapted set of graphical user interface elements (for the target monitor setup) automatically preserves the setups for the graphical user interface elements in the source monitor setup. This has the advantage that, in particular, resolution and color scheme (which is an important quality measure, because an appropriate color scheme improves diagnostic processability of the data and an incorrect color scheme may lead to wrong diagnostic evaluations) are maintained in the target setup, too and are not broken.

Generating the virtual monitor component comprises calculating an adapted set of configuration properties, which are used for displaying the adapted graphical user interface elements in the target monitor setup. The adapted set of configuration properties may be executed by re-setting or newly setting or overriding previous values e.g. for color, resolution, orientation and geometry. The old values may be received from a device manager, which may be re-set by a so called cradle, which acts a intercepting software component, intercepting the virtual monitor - representing the 'old' monitor in the source monitor setup - and the target monitor. This has the technical advantage that the target monitor may be controlled by the cradle with an optimized setting for displaying the graphical user interface elements of the application dedicatedly on the target monitor.

Therefore, a technical advantage is to be seen in that a manual overriding of pre-defined settings due to a monitor change is not needed and is preferably de-activated in order to safeguard medical quality requirements. According to the invention in a preceding step, it is automatically verified if the required medical quality requirements may be met on the target system as well and only if yes, a transfer to the target system may be executed and otherwise forbidden or prevented.

According to another preferred embodiment of the invention, the source and/or the target monitor setup may comprise a single monitor or multiple monitors. Particularly, the source monitor setup is a multi-monitor setup, e.g. a 4-monitor setup and the target monitor setup may be a single monitor setup with a large-scale high-resolution monitor. In preferred embodiments, the number of monitors in the source monitor setup may differ from the number of monitors in the target monitor setup. However, it is also possible to apply the adaption mechanism for the same number of monitors but with different layout requirements or with different configuration properties (e.g. resolution). Thus, operating of the application during runtime may become much more flexible and does not necessitate to change the application code.

According to another preferred embodiment of the invention, the method may further comprise:
- Executing a physical impedance matching algorithm for each of the target monitors separately by re-setting or newly and dynamically calculating (overwriting) the received requirements of the application. The algorithm may be executed on or by means of a core device manager. The impedance matching algorithm comprises resizing the application layout, at the same time across monitors and on each monitor, in a way that the application part for this monitor fits on the monitor, that each element of the application has at least its minimal size such that all current content is entirely visible, all configured aspect ratios and other geometric proportions of the entire layout are met, that the application size is matched to the physical resolution of the monitor in a configurable optimized way such that screen space is used as much as reasonable for optimized readability of text and images, and that images are rendered to each segment on each monitor in diagnostic quality, and that if subparts of the application layout span on several monitors, such subparts appear in the same size, colors and resolution.

The physical impedance matching algorithm refers to a kind of normalization so that all monitor parameters (relating to the monitor hardware) need to be standardized or normalized and need to be kept constant before the set of graphical user interface elements for the target monitor setup may be adapted. The physical impedance matching algorithm may be executed for several monitors in parallel. This has the technical effect that also different target monitors (with different technical settings or parameters) may be considered as being similar or constant for the purpose of adaption.

According to another preferred embodiment of the invention, the method may even be executed whilst the application is running and/or is initiated automatically if a graphical user interface element (of the set) or a part thereof is transferred to another monitor (e.g. by a user interaction). This improves quality as the new UI layout may be controlled in dependence of the target monitor setup properties.

According to another preferred embodiment of the invention, the size and/or position of each of the user interface elements of the adapted set of graphical user interface elements (for the target monitor setup) is dynamically and separately calculated such as clinical or medical layout quality requirements are met to fulfil legal and regulatory standards. Usually, a re-sizing and a re-positioning of all graphical user interface elements (e.g. windows or elements thereof) is executed in order to make use of the functionalities and/or options of the target monitor setup.

According to another preferred embodiment of the invention, the adapted set of graphical user interface elements are de-activated (e.g. visualized in black) during transfer between the source and the target monitor setup. For example, it may be pre-defined that the respective windows may be displayed in black color without any content for prevent any errors during transfer.

According to another preferred embodiment of the invention, the method is reversible so that in reply to a reverse signal (e.g. based on a user interaction) the target monitor setup is automatically transferred back into the source monitor setup. This simplifies use of the method, because to 'old' state will not be lost.

According to another preferred embodiment of the invention, an output interface of the application is re-directed to the virtual monitor component which in turn causes the physical display to be executed on at least one target monitor of the target monitor setup. Generally, the target monitor may be a local monitor ("local" means that the application resides on the same computer as the target monitor) or a remote monitor. Further, the physical target monitor(s) is (are) different from the source monitor(s).

According to another preferred embodiment of the invention, each of the physical monitors of the source monitor setup is mapped to a virtual monitor. Thus, the set of virtual monitors serves to simulate the source monitor setup for the application. The virtual monitor may be generated by a cradle component. Thus, the cradles function as monitor simulation component for the purpose to integrate old monitor-bound legacy applications. Cradles shield the local monitors and the remote monitors by their simulation of monitors for optimized visualization of graphical user interface elements of the application for the (remote) target setups.

According to another preferred embodiment of the invention, if at least one graphical user interface element of the source monitor setup is adapted to comply with the target monitor setup, then all other graphical user interface elements of the application are automatically evaluated for being adapted, too. This has the advantage that a correct adaption of the UI layout as a whole is automatically calculated and not only for single elements. Thus, automatically all elements of the set of graphical user interface elements are evaluated in a common adaption procedure.

According to another preferred embodiment of the invention, the physical device properties of the target monitor setup comprise number of the target monitors, size, resolution, color scheme (or 'color settings') scaling factor and/or other properties. This helps to process the monitor hardware of the target system in a detailed manner so that the visualization of the layout may be optimized accordingly.

According to another preferred embodiment of the invention, the checking requires a positive test result for each segment of a graphical user interface element and for all of the graphical user interface elements of the set for the application concerning:
- color scheme, resolution, scaling and/or contrast as required by the application;
- size for a visualization without overlapping of all UI elements , size and resolution for readability of the content in all UI elements, and/or size and resolution for the presentation of the medical images for diagnostic issues.

Up to now, the invention has been described with respect to the claimed method. Features, advantages or alternative embodiments herein can be assigned to the other claimed objects (e.g. the computer program or a device, i.e. the core device manager or a computer program product) and vice versa. In other words, the subject matter which is claimed or described with respect to the device can be improved with features described or claimed in the context of the method and vice versa. In this case, the functional features of the method are embodied by structural units of the system and vice versa, respectively. Generally, in computer science a software implementation and a corresponding hardware implementation are equivalent. Thus, for example, a method step for "storing" data may be performed with a storage unit and respective instructions to write data into the storage. For the sake of avoiding redundancy, although the device may also be used in the alternative embodiments described with reference to the method, these embodiments are not explicitly described again for the device.

In another aspect the invention relates to a core device manager which is adapted to execute the method, described above. The core device manager may be used for automatic adaption of a set of graphical user interface elements for an application to at least one target monitor setup, wherein the set of graphical user interface elements was generated for a source monitor setup. The core device manager may be part of a controller and comprises:
- A property interface which is configured to detect physical device properties of the target monitor setup;
- A requirement interface, which is configured for receiving requirements of the application;
- A processing unit which is configured to check if detected physical device properties of the target monitor setup are appropriate for the received requirements and if yes to provide control instructions for adapting the set of graphical user interface elements for the source monitor setup to create an adapted set of graphical user interface elements for the target monitor setup by generating a runtime instance of a virtual monitor component for each monitor or for each application in the source monitor setup.

In another aspect the invention relates to a computer program with instructions for adaption of a UI layout (in the form of a set of graphical user elements) by executing a method as described before, if the program is executed on a computer.

In another aspect the invention relates to a computer program product comprising a computer program, the computer program being loadable into a memory unit of a computing unit, including program code sections to make the computing unit execute the method for adaption of a UI layout as described above, when the computer program is executed in said computing unit.

In another aspect the invention relates to a computer-readable medium, on which program code sections of a computer program are stored or saved, said program code sections being loadable into and/or executable in a computing unit to make the computing unit execute the method for adaption of a UI layout according to an aspect of the invention, when the program code sections are executed in the computing unit.

The realization of the invention by a computer program product and/or a computer-readable medium has the advantage that already existing servers or clients can be easily adopted by software updates in order to work as proposed by the invention.

In the following a short definition of terms used in this application is given.

A source monitor setup refers to a setup of at least one physical monitor which is addressed by an application to visualize the graphical user interface elements of the application. The source monitor setup may be defined by a certain number and/or a certain type of physical monitor. The source monitor setup may e.g. comprise 1, 2, 4 or more monitors. For example:
- a source monitor setup may be "4 monitor setup with 4 monitors and with size slxs2 and with resolution r123";
- 4 monitor setup, where 2 monitors are of size s1 and resolution r1 orientation o1 and 2 monitors are of size s2 and resolution r2 and orientation o2;
- 8 monitor setup where, from left to right, 2 monitors with s1, r1, o1, 4 larger monitors with s2, r2, o2, again 2 monitors with s1, r1, o1;
- An ultra-sound machine is used in multiple rooms, and connects to a different external larger monitor in each room (cable or WLAN);
- A setup with 1 monitor with very large space, used for diagnosis, and 1 monitor of regular size, used for the worklist.

In the same manner and combinations, more such setups occur in alternative embodiments. The user can work with an application first in a first setup, close the application, and open the application with same or other data in a second setup, close the application, and continue working the same or in a different setup.

A target monitor setup may be explained analog to the source monitor setup. The target monitor setup may e.g. be a large-scale high resolution monitor. The target monitor setup is a setup, the application was not originally intended to be used for (during the implementation or development phase). A typical use case is that an application was originally developed to be used for a source monitor setup with e.g. 4 monitors and in a later phase (e.g. after 2 years) new monitor hardware is available and should be used with the application without re-coding.

A graphical user interface element is controlled by the application and is used as input/output interface. An application usually has several such elements, which could e.g. be a main window and at least one child windows, controls, buttons, tables, panels, frames, images, segments of windows, like buttons, fields etc. The windows may differ in size, duration, content and number.

A set of graphical user interface elements represents or refers to a UI layout. The layout is based on pre-defined rules how to present the data (size, position on the monitor, color scheme, etc.).

The term "adapting" should be construed as morphing or transferring. The whole UI layout of the application should be transferred to the target monitor setup so that the size, resolution, position and/or other parameters for displaying the graphical user interface elements may be visualized in a manner so that quality requirements of the application are still met and that all regulatory and/or legal requirements concerning quality for medical applications are fulfilled, too. Typically, the size, position, resolution, orientation (portrait and landscape format) and/or color scheme of all or a selection of the graphical user interface elements are recalculated during the adaption. The same look and feel of the UI in the source monitor setup should be maintained in the target monitor setup.

Properties relate to technical attributes or characteristics of the target monitor setup, like number of physical monitors, their resolution, their size, their color scheme, the form factor (relating to touch enabled or not and/or gestures enabled or not), the aspect ratio - (ratio of width-toheight), orientation, and/or scaling.

The requirements of the application may be defined by the application itself. The requirements may e.g. comprise an indication how many monitors are necessary for the application, their minimal sizes, their orientation, color depth, type of window : e.g. "dual monitor setup for a standard reading environment" M1 for worklist has size _1,minimal resolution_1,orientation:1,24 bit color, window with a minimal size/height and a max size/height, M2 has size_1,mininimal resolution_2,orientation_1,24 bit true color, window with a minimal size/height and no size/height (allows to cover more space dynamically for showing more images ; content per window element and so on. The requirements may be stored in a requirement storage, which is accessible by a device manager (software component).

Checking is a computer-implemented method step, which is exclusively performed by a processor of a computer in an automatic manner. The checking may be executed by a software algorithm. The checking may comprise a multiple step procedure, comprising the steps of:
- Per segment (as part or portion of a graphical user interface element that shows medical images that are subject to medical reading and require a diagnosis in a medical report as the result of the reading process): Checking whether color depth is as required, checking whether resolution is above minimal value, whether scaling is 100%, contrast is in range and whether minimal segment size is displayable;
- Per application: Checking whether color depth is as required, checking whether resolution is above minimal value, whether scaling is 100%, contrast is in range and whether minimal segment size is displayable. The segment(s) cover/s a part of the display screen, required by the application. Oftentimes it is much more difficult to minimize the other application parts compared to minimizing the segments with the images. Thus, minimizing the segments with the images is preferred. If space is limited, the segments therefore would become too small at first. Therefore, it is necessary to calculate a minimal segment size.

The physical impedance matching is executed for each of the target monitors separately. The resolution, size and/or other geometric features and/or other requirements of the application are transferred in optimized values. If the matching was successful, then the image rendering in the imaging pipeline is executed such as a processed or prepared so that the medical image in the respective segment may be displayed in required quality.

The adaption transforms the original graphical user elements into an adapted set of graphical user elements for the target setup. The adapted set of graphical user elements may be calculated by a core device algorithm, based on the properties of the target monitor.

Further, the core device manager is adapted to perform all steps as described or claimed in connection with the corresponding method which is to be performed in the corresponding computing entity or computer. The computer can be a viewing client or a server. The application may run on the computer or can be run on another computing device remote from the computer, where the core device manager is installed.

Generally, the computer for executing UI layout adaption task, as mentioned above, may be a personal computer or a workstation in a computer network and may include a processing unit, a system memory, and a system bus that couples various system components including the system memory to the processing unit. The system bus may be any of several types of bus structures including a memory bus or memory controller, a peripheral bus, and a local bus using any of a variety of bus architectures. The system memory may include read only memory (ROM) and/or random access memory (RAM). A basic input/output system (BIOS), containing basic routines that help to transfer information between elements within the personal computer, such as during start-up, may be stored in ROM. The computer may also include a hard disk drive for reading from and writing to a hard disk, a magnetic disk drive for reading from or writing to a (e.g., removable) magnetic disk, and an optical disk drive for reading from or writing to a removable (magneto) optical disk such as a compact disk or other (magneto) optical media. The hard disk drive, magnetic disk drive, and (magneto) optical disk drive may be coupled with the system bus by a hard disk drive interface, a magnetic disk drive interface, and a (magneto) optical drive interface, respectively. The drives and their associated storage media provide nonvolatile storage of machine readable instructions, data structures, program modules and other data for the computer. Although the exemplary environment described herein employs a hard disk, a removable magnetic disk and a removable (magneto) optical disk, those skilled in the art will appreciate that other types of storage media, such as magnetic cassettes, flash memory cards, digital video disks, Bernoulli cartridges, random access memories (RAMs), read only memories (ROM), and the like, may be used instead of, or in addition to, the storage devices introduced above. A number of program modules may be stored on the hard disk, magnetic disk, (magneto) optical disk, ROM or RAM, such as an operating system, one or more application programs, like the method for adapting the UI layout and/or other program modules, and/or program data for example. A user may enter commands and information into the computer through input devices, such as a keyboard and pointing device, for example. Other input devices such as a microphone, joystick, game pad, satellite dish, scanner, or the like may also be included. These and other input devices are often connected to the processing unit through a serial port interface coupled to the system bus. However, input devices may be connected by other interfaces, such as a parallel port, a game port or a universal serial bus (USB). A monitor (e.g. a GUI) or other type of display device may also be connected to the system bus via an interface, such as a video adapter for example. In addition to the monitor, the computer may include other peripheral output devices, such as speakers and printers for example.

The computer may operate in a networked environment which defines logical connections to one or more remote computers. The remote computer may be another personal computer, a server, a router, a network PC, a peer device or other common network node, and may include many or all of the elements described above relative to the personal computer. The logical connections include a local area network (LAN) and a wide area network (WAN), an intranet and the Internet.

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labeled with the same reference signs in different figures.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### Brief Description of the Drawings

In the following, the invention will further be described with reference to exemplary embodiments illustrated in the figures, in which:
Fig. 1 schematically shows a structural overview of a transfer between a source monitor setup and a target monitor setup;
Fig. 2 is a flow chart of an adaption method according to a preferred embodiment of the invention;
Fig. 3 is another schematic overview figure representing a core device manager and its interfaces according to a preferred embodiment of the invention;
Fig. 4 shows a deployment of the architecture for executing the adaption method according to a preferred embodiment.

### Detailed Description

In the following description, for purposes of explanation and not limitation, specific details are set forth, such as particular clinical use cases and clinical environments and communication standards (DICOM) etc., in order to provide a thorough understanding of the current invention. It will be apparent to one skilled in the art that the current invention may be practiced in other embodiments that depart from these specific details. For example, the skilled artisan will appreciate that the current invention may be practiced with any application for different functionalities or for different computing entities, like for example viewing clients, servers, mobile processing devices. As another example, the invention may also be implemented in any mobile device, having the respective interfaces, like a smartphone, a mobile phone, a mobile computer system, or a personal digital assistant.

For summarizing, it is proposed to provide a technique for adapting a layout of a user interface (UI), in particular a graphical UI to a different type of visualizing hardware, e.g. a different monitor. A new or adapted system architecture is proposed so that it is possible to transfer an original UI layout for a first monitor setup (e.g. with 4 monitors) to another second monitor setup (e.g. one single large scale monitor) without the need to re-code the application.

The transfer of the UI layout may be initiated during a viewing task of medical images on a first monitor hardware, wherein the data should be shared on a second monitor hardware, which is different from the first one, so that the UI layout has to be adapted in order to safeguard quality requirements (e.g. the correct size and resolution of the presented data).

With the proposed solution, the application implementation logic is no longer bound to the specific type of monitor hardware.

The invention is based on an intercepting module (a core device manager 300) which is adapted to calculate an adapted set of graphical user interface elements for the target monitor setup. This calculation processes the technical monitor properties of the target device, so that the visualization of the layout is optimized for the respective target monitor specifically.

Moving application windows from one screen to the other with 'extended desktops' as known in the art, does not work for medical applications, because the latter have to ensure clinical use, because such products normally appear full screen on multiple monitors, and dragging floating windows (instead of full screen) to yet another monitor destroys the product layout (e.g. broken hanging protocols) and creates additional product risks (e.g. resolution not for clinical use). Also, the known tool "Split Screen" of e.g. Windows10 does not work in the medical domain. It partitions the monitor space into maximal four quadrants and tiles. Thus, only a very concrete setup (four regular windows) with a respective relationship of windows to one monitor hardware is organized. For a very large monitor space, such a solution will be even wrong, because the resulting window will be too big for a given application that has a layout for a regular' monitor hardware, or won't match the preplanned ergonomic layout of the vendors. Therefore, a re-calculation of UI elements becomes necessary for an optimized positioning with respect to the specific target monitor.

The technical problem is, that neither the current operating systems nor the current user interface toolkits provide a mechanism to show an application product with multiplemonitor-setups simply on e.g. one or two large scale monitors, with same or better quality, but without changing the product at high cost for adapting to yet another monitor hardware time and again.

The proposed solution is based on a so called space cradle (also called cradle component cc). For each 'old' monitor in the application's original multi-monitor-setup, a dedicated run-time instance of a SpaceCradle is generated, that replaces the 'old' monitor and provides backward compatibility to the application, by means of new intercepting window that simulates 'monitor space' to the application. If the application layout is configured in terms of 'number of application windows' in contrast to 'number of monitors' (as in 'old' multi-monitor setups), then the number of SpaceCradles can be reduced to the number of physical (large scale) monitors, and each SpaceCradle can also manage all application windows on one monitor. This windowing setup allows the SpaceCradle to adapt the 'old' and 'new' monitor physics and preserves the intended clinical use. Each SpaceCradle connects to the ProductSpace or application space component to ensure the consistent visualization of all applications (e.g. applications could have spanned multiple monitors in the 'old' setup, so visual alignments and sizing is required also on large monitors, and panes and dialogs might appear docking or floating, and old and additional requirements for their size and position have to be implemented by the set of SpaceCradles, e.g. open panes to the right or top non-overlapping, or e.g. open dialogs next or centered to the related UI contents but overlapping, or e.g. resize only the width of the window with the image area if the hanging protocol changes.

Thus, the component ProductSpace is provided. It reads configuration of the continuous 'product space' on the target monitor (e.g. number and type of monitors to map to the product space, number and type of windows to provide for the applications). It checks if target resolution fits with applicational requirements such that the intended clinical use is preserved. Further, it manages consistent product view with all windows from all SpaceCradles, distributes configuration data and run-time positions among SpaceCradles. Further, it implements additional product on-screen multi-window behaviors for e.g. resizing, positioning, window contingency, adherence. It persists (stores) configuration data of all windows and physical monitors and novel virtual monitors, and recalculates configuration data in order to keep configuration data of windows and monitors consistent (e.g. windows position and size, when switching to a large scale monitor, based on physical properties read form the target monitor hardware).

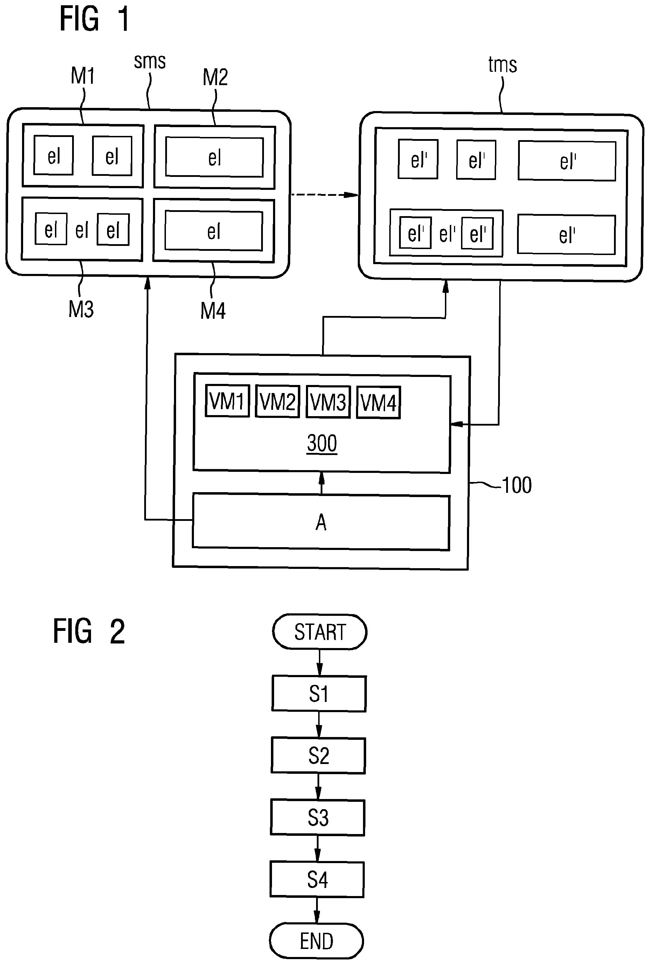

Fig. 1 shows a schematic representation of a system architecture according to the proposed solution. A medical application A resides on a computer 100. On the computer 100 a core device manager 300 may be implemented which has the task to adapt the original UI layout which has been created for a source monitor setup sms with four (4) monitors, shown in Fig. 1 on the left to be presented on another monitor of a target monitor setup tms (one single large scale monitor) which is shown on the right. Several graphical user interface elements have to be presented, which are in referenced with the numeral 'el'. In the example shown in Fig. 1, two elements el are intended to be presented on monitor M1, one element el is intended to be presented on monitor M2, three elements el are intended to be presented on monitor M3 and so on.

The target monitor setup tms only consists of one single large screen and high resolution monitor. However, in other examples the source monitor as well as the target monitor setup may comprise a different number of monitors, e.g. the target setup may be changed in a subsequent phase to comprise 8 monitors.

The core device manager 300 may be implemented on the computer 100 on which the application A resides. However, this is not always the typical architecture. Other embodiments are based on the fact that the core device manager 300 may be implemented on a separate computer 100 which interacts via interfaces with the other computers.

Typically, a controller is used to control the monitor hardware and to interact with the application. Therefore, in a first embodiment, the core device manager 300 may be provided as an electronic module and part of a controller. In a second embodiment, the controller may be a separate instance. For example, a model-view-controller architecture may be used, which allows flexible structures in which the interface is independent from and indirectly linked to application functions, so the GUI can be customized easily. This allows to change the interface more easily.

The core device manager 300 is adapted to execute the method for adaption of the UI layout as described above. In particular, the core device manager 300 is adapted to execute the following steps, which are also shown in Fig. 2 in the flow chart:
- In step S1: Detecting physical device properties P of the target monitor setup tms;
- In step S2: Receiving requirements R of the application A;
- In step S3: Checking if detected physical device properties P of the target monitor setup tms is appropriate for the received requirements R and if yes:
- In step S4: Adapting the set of graphical user interface elements el of the source monitor setup sms by creating an adapted set of graphical user interface elements el' for the target monitor setup tms by generating a runtime instance of a virtual monitor component vmc for each monitor in the source monitor setup sms.

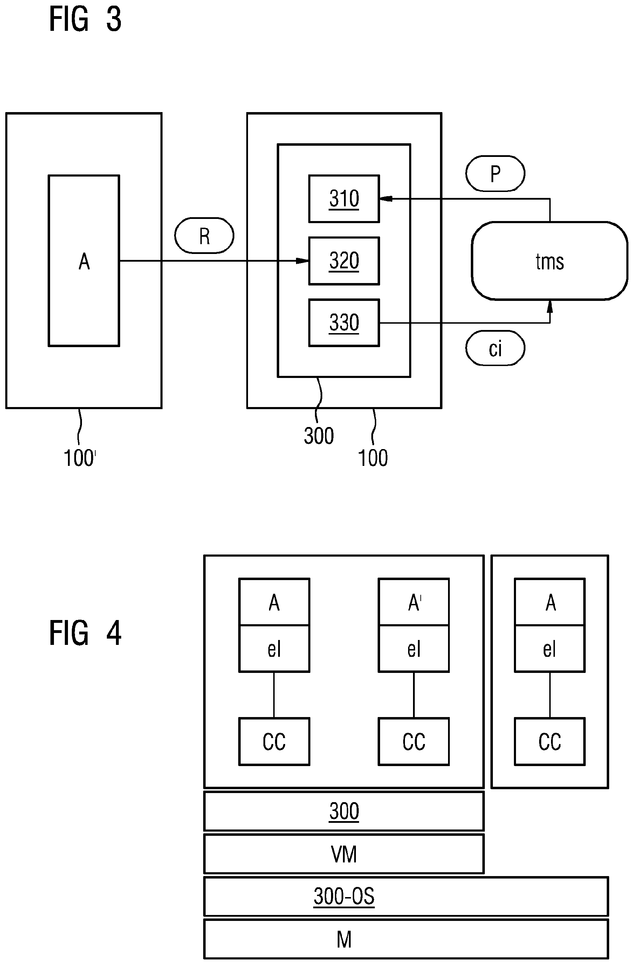

Fig. 3 shows another schematic representation of the core device manager 300 in more detail and in interaction with other computing modules. In this example, the core device manager 300 is deployed on a computer 100 and the application A resides on another computer 100'. The core device manager 300 comprises a property interface 310 which is configured to detect physical device properties P of the target monitor setup tms. Further it comprises a requirement interface 320, which is configured for receiving requirements R of the application A. Finally, it comprises a processing unit 330 which is configured to check if detected physical device properties P of the target monitor setup are appropriate for the received requirements R and if yes to provide control instructions ci for adapting the set of graphical user interface elements for the source monitor setup to create an adapted set of graphical user interface elements for the target monitor setup by generating a runtime instance of a virtual monitor component for each monitor in the source monitor setup. The control instruction ci may be used to control the monitors in the target monitor setup tms to visualize the adapted set of graphical user interface elements el'.

Fig. 4 shows an architecture with two different transformation chains for two applications A, A', wherein in general, the application may include third party applications. Fig. 4 shows two scenarios, one with an intermediate virtualization component and one without such virtualization component (left/right). The applications A, A' generate windows as graphical user interface elements el. In this example, for each application A, A' a space cradle component cc is created which is assigned to the respective application A, A'. Each space cradle cc connects to a ProductSpace and respective configurations to ensure the consistent visualization of graphical user interface elements el of the applications, wherein dialog windows might appear docking or floating. A device manager component 300 is provided which processes the actual real viewing hardware, i.e. the monitor setup, which is currently used and not the viewing hardware (monitor) on which the application runs. Fig. 4 shows two instances of the device manager component 300, a first one which is based on the operating system, e.g. based on Microsoft WindowManagement and Desktop - referenced in Fig. 4 with numeral 300-OS and a second one which is based on WindowManagement and Desktop - referenced in Fig. 4 with 300. The device manager component 300 calculates all configurations and settings for visualization of the graphical user interface elements el on the target monitor setup tms anew. The device manager component 300 reads the configuration and the number of the monitors in the target monitor setup tms together with the physical device properties P. The device manager component 300 may interact with a virtual machine VM. The cradle component cc has to address the window manager of the operating system (e.g. WINDOWS) for visualization of a graphical user interface elements el in the target monitor setup tms. In the embodiment shown in Fig. 4, the physical monitor is remote of the virtual machine VM. In another embodiment, the virtual machine may also run on a local computing entity.

Due to the architecture of the system it is assured that the connected physical monitors may be detected and that it is possible to retrieve and query its parameters (or parameter settings and configurations) in order to use them for processing and in particular for automatic adaption of a set of graphical user interface elements el.

The cradle component cc interacts with window manager component of the operating system, if the cradle component cc is to visualize an element on a monitor. A virtual machine may be used for providing a virtualization of the processing unit, memory and hardware. The virtual machine runs its own operating system, on which the cradle component runs.

Below of this virtual machine VM a window manager of the operating system is operated, which addresses the physical monitor and may be provided locally or remote.

An important aspect is, that all cradle components cc lead the application A, A' to believe to operate virtual monitors in form of window elements with all parameters as mentioned above. All the cradle components cc have parameterized the user interface elements so that they may be visualized in accordance with the requirements on the target monitor setup tms.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

A single unit or device may fulfil the functions of several items recited in the claims. The mere fact that certain measures are recited in mutually different dependent claims does not indicate that a combination of these measures cannot be used to advantage.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantages which are described with respect to a particular embodiment of present invention or with respect to a particular figure are, wherever applicable, also advantages of other embodiments of the present invention.

## Claims

1. Computer-implemented method for automatically adapting a set of graphical user interface elements (el) for a medical application (A) to be used in a target monitor setup (tms), wherein the set of graphical user interface elements (el) was generated for a source monitor setup (sms), wherein the target monitor setup and the source monitor setup refer to a setup of at least one physical monitor which is addressed by an application to visualize the graphical user interface elements of the application, comprising the steps:
- Detecting (S1) physical device properties (P) of the target monitor setup (tms);
- Receiving (S2) requirements (R) of the medical application (A) ;
- Checking (S3) if detected physical device properties (P) of the target monitor setup (tms) are appropriate for the received requirements (R) for displaying images and application windows of the medical application (A) correctly for safeguarding quality requirements for clinical applications and if yes:
- Adapting (S4) the set of graphical user interface elements (el) of the source monitor setup (sms) by creating an adapted set of graphical user interface elements (el') for the target monitor setup (tms) by generating a runtime instance of a virtual monitor component (VM) for each monitor or for each application in the source monitor setup (sms), wherein the virtual monitor component (VM) acts as intercepting window in the target monitor setup (tms) so that each of the physical monitors (M) of the source monitor setup (sms) is mapped to a virtual monitor component (VM), and wherein generating the virtual monitor component comprises calculating an adapted set of configuration properties executed by re-setting or newly setting or overriding previous values, which are used for displaying the adapted graphical user interface elements in the target monitor setup, and wherein the method is reversible so that in reply to a reverse signal the target monitor setup (tms) is automatically transferred back into the source monitor setup (sms).

2. Method according to any of the preceding claims, wherein the source monitor setup (sms) and/or the target monitor setup (tms) may comprise a single monitor (M) or multiple monitors (M).

3. Method according to any of the preceding claims, wherein the method further comprises:
- Executing a physical impedance matching algorithm for each of the target monitors separately by re-setting the received requirements (R) of the medical application (A) by means of a core device manager, wherein the physical impedance matching algorithm serves as normalization so that all monitor parameters need to be normalized and need to be kept constant before the set of graphical user interface elements for the target monitor setup may be adapted.

4. Method according to any of the preceding claims, wherein the method is automatically initiated if a graphical user interface element (el) or a part thereof is transferred to another monitor.

5. Method according to any of the preceding claims, wherein the size and/or position of each of the adapted set of graphical user interface elements (el') is dynamically and separately calculated so that layout quality requirements (R) are met for the whole set of adapted graphical user interface elements (el') on the target monitor setup (tms).

6. Method according to any of the preceding claims, wherein the elements (el') of the adapted set of graphical user interface elements are de-activated while the transfer between the source monitor setup (sms) and the target monitor setup (tms) is executed.

7. Method according to any of the preceding claims, wherein an output interface of the application is re-directed to the virtual monitor component (VM) which in turn causes the physical display to be executed on at least one target monitor of the target monitor setup (tms).

8. Method according to any of the preceding claims, wherein if at least one graphical user interface element (el) of the source monitor setup (sms) is adapted, then all other graphical user interface elements for the medical application (A) are automatically evaluated for being adapted, too.

9. Method according to any of the preceding claims, wherein the physical device properties (P) of the target monitor setup (tms) comprise number, size, resolution, color scheme, scaling.

10. Method according to any of the preceding claims, wherein the checking requires a positive test result for each segment of a graphical user interface element and for all of the graphical user interface elements of the application concerning:
- color scheme, resolution, scaling and/or contrast as required by the application.

11. Core device manager (300) for automatic adaption of a set of graphical user interface elements (el) for a medical application (A) to at least one target monitor setup (tms), wherein the set of graphical user interface elements (el) was generated for a source monitor setup (sms), wherein the target monitor setup and the source monitor setup refer to a setup of at least one physical monitor which is addressed by an application to visualize the graphical user interface elements of the application, and wherein the core device manager (300) is adapted to execute the method according to any of the preceding method claims and comprises:
- A property interface (310) which is configured to detect physical device properties (P) of the target monitor setup (tms);
- A requirement interface (320), which is configured for receiving requirements (R) of the medical application (A);
- A processing unit (330) which is configured to check if detected physical device properties (P) of the target monitor setup (tms) are appropriate for the received requirements (R) for displaying images and application windows of the medical application (A) correctly for safeguarding quality requirements for clinical applications and if yes to provide control instructions (ci) for adapting the set of graphical user interface elements for the source monitor setup to create an adapted set of graphical user interface elements (el') for the target monitor setup (tms) by generating a runtime instance of a virtual monitor component (VM) for each monitor or for each application in the source monitor setup (sms), wherein the virtual monitor component (VM) acts as intercepting window in the target monitor setup (tms) so that each of the physical monitors (M) of the source monitor setup (sms) is mapped to a virtual monitor component (VM), and wherein generating the virtual monitor component (VM) comprises calculating an adapted set of configuration properties executed by re-setting or newly setting or overriding previous values, which are used for displaying the adapted graphical user interface elements in the target monitor setup, and
wherein the method is reversible so that in reply to a reverse signal the target monitor setup (tms) is automatically transferred back into the source monitor setup (sms).

12. Computer program with instructions for executing a method according to any of the preceding method claims, if the program is executed on a computer.

## Patentansprüche

1. Computerimplementiertes Verfahren zum automatischen Anpassen eines Satzes von Elementen einer grafischen Benutzerschnittstelle (el) für eine medizinische Anwendung (A), die in einem Zielmonitoraufbau (tms, Target Monitor Setup) verwendet werden soll, wobei der Satz von Elementen einer grafischen Benutzerschnittstelle (el) für einen Quellmonitoraufbau (sms, Source Monitor Setup) erzeugt wurde, wobei sich Zielmonitoraufbau und Quellmonitoraufbau auf einen Aufbau wenigstens eines physischen Monitors beziehen, der von einer Anwendung angesprochen wird, um die Elemente einer grafischen Benutzerschnittstelle der Anwendung zu visualisieren, die Schritte umfassend:
- Erkennen (S1) der physischen Vorrichtungseigenschaften (P) des Zielmonitoraufbaus (tms);
- Empfangen (S2) von Anforderungen (R) der medizinischen Anwendung (A);
- Prüfen (S3), ob die erkannten physischen Vorrichtungseigenschaften (P) des Zielmonitoraufbaus (tms) für die empfangenen Anforderungen (R) geeignet sind, um Bilder und Anwendungsfenster der medizinischen Anwendung (A) korrekt anzuzeigen, um die Qualitätsanforderungen für klinische Anwendungen zu gewährleisten, und wenn ja:
- Anpassen (S4) des Satzes von Elementen einer grafischen Benutzerschnittstelle (el) des Quellmonitoraufbaus (sms) durch Erstellen eines angepassten Satzes von Elementen einer grafischen Benutzerschnittstelle (el') für den Zielmonitoraufbau (tms), indem eine Laufzeitinstanz einer virtuellen Monitorkomponente (VM) für jeden Monitor oder für jede Anwendung im Quellmonitoraufbau (sms) erzeugt wird, wobei die virtuelle Monitorkomponente (VM) als Abfangfenster im Zielmonitoraufbau (tms) fungiert, so dass jeder der physischen Monitore (M) des Quellmonitoraufbaus (sms) auf eine virtuelle Monitorkomponente (VM) abgebildet wird, und wobei das Erzeugen der virtuellen Monitorkomponente das Berechnen eines angepassten Satzes von Konfigurationseigenschaften umfasst, ausgeführt durch Zurücksetzen oder Neueinstellen oder Überschreiben früherer Werte, die zum Anzeigen der angepassten Elemente einer grafischen Benutzerschnittstelle im Zielmonitoraufbau verwendet werden, und wobei das Verfahren umkehrbar ist, so dass als Reaktion auf ein Umkehrsignal der Zielmonitoraufbau (tms) automatisch in den Quellmonitoraufbau (sms) zurück übertragen wird.

2. Verfahren gemäß einem der vorstehenden Ansprüche, wobei der Quellmonitoraufbau (sms) und/oder der Zielmonitoraufbau (tms) einen einzelnen Monitor (M) oder mehrere Monitore (M) umfassen können.

3. Verfahren gemäß einem der vorstehenden Ansprüche, wobei das Verfahren ferner umfasst:
- Ausführen eines Algorithmus für physische Impedanzanpassung für jeden der Zielmonitore separat, indem die empfangenen Anforderungen (R) der medizinischen Anwendung (A) mit Hilfe eines Kernvorrichtungsmanagers neu eingestellt werden, wobei der Algorithmus für physische Impedanzanpassung als Normalisierung dient, so dass alle Monitorparameter normalisiert und konstant gehalten werden müssen, bevor der Satz von Elementen einer grafischen Benutzerschnittstelle für den Zielmonitoraufbau angepasst werden kann.

4. Verfahren gemäß einem der vorstehenden Ansprüche, wobei das Verfahren automatisch eingeleitet wird, wenn ein Element einer grafischen Benutzerschnittstelle (el) oder ein Teil davon auf einen anderen Monitor übertragen wird.

5. Verfahren gemäß einem der vorstehenden Ansprüche, wobei die Größe und/oder Position jedes des angepassten Satzes von Elementen einer grafischen Benutzerschnittstelle (el') dynamisch und separat berechnet wird, so dass die Anforderungen (R) an die Layoutqualität für den gesamten Satz angepasster Elemente einer grafischen Benutzerschnittstelle (el') auf dem Zielmonitoraufbau (tms) erfüllt werden.

6. Verfahren gemäß einem der vorstehenden Ansprüche, wobei die Elemente (el') des angepassten Satzes von Elementen einer grafischen Benutzerschnittstelle deaktiviert werden, während die Übertragung zwischen dem Quellmonitoraufbau (sms) und dem Zielmonitoraufbau (tms) ausgeführt wird.

7. Verfahren gemäß einem der vorstehenden Ansprüche, wobei eine Ausgabeschnittstelle der Anwendung an die virtuelle Monitorkomponente (VM) umgeleitet wird, die ihrerseits bewirkt, dass die physische Anzeige auf wenigstens einem Zielmonitor des Zielmonitoraufbaus (tms) ausgeführt wird.

8. Verfahren gemäß einem der vorstehenden Ansprüche, wobei, wenn wenigstens ein Element einer grafischen Benutzerschnittstelle (el) des Quellmonitoraufbaus (sms) angepasst wird, alle anderen Elemente einer grafischen Benutzerschnittstelle für die medizinische Anwendung (A) automatisch daraufhin überprüft werden, ebenfalls angepasst zu werden.

9. Verfahren gemäß einem der vorstehenden Ansprüche, wobei die physischen Vorrichtungseigenschaften (P) des Zielmonitoraufbaus (tms) Anzahl, Größe, Auflösung, Farbschema, Skalierung umfassen.

10. Verfahren gemäß einem der vorstehenden Ansprüche, wobei das Überprüfen ein positives Testergebnis für jedes Segment eines Elements einer grafischen Benutzerschnittstelle und für alle Elemente einer grafischen Benutzerschnittstelle der Anwendung erfordert in Bezug auf:
- Farbschema, Auflösung, Skalierung und/oder Kontrast je nach Anforderung der Anwendung.

11. Kernvorrichtungsmanager (300) zum automatischen Anpassen eines Satzes von Elementen einer grafischen Benutzerschnittstelle (el) für eine medizinische Anwendung (A) an wenigstens einen Zielmonitoraufbau (tms, Target Monitor Setup), wobei der Satz von Elementen einer grafischen Benutzerschnittstelle (el) für einen Quellmonitoraufbau (sms, Source Monitor Setup) erzeugt wurde, wobei sich Zielmonitoraufbau und Quellmonitoraufbau auf einen Aufbau wenigstens eines physischen Monitors beziehen, der von einer Anwendung angesprochen wird, um die Elemente einer grafischen Benutzerschnittstelle der Anwendung zu visualisieren, und wobei der Kernvorrichtungsmanager (300) dafür ausgelegt ist, das Verfahren gemäß einem der vorstehenden Verfahrensansprüche auszuführen, und umfasst:
- eine Eigenschaftsschnittstelle (310), die dafür ausgelegt ist, physische Vorrichtungseigenschaften (P) des Zielmonitoraufbaus (tms) zu erkennen;
- eine Anforderungsschnittstelle (320), die dafür ausgelegt ist, Anforderungen (R) der medizinischen Anwendung (A) zu empfangen;
- eine Verarbeitungseinheit (330), die dafür ausgelegt ist zu prüfen, ob die erkannten physischen Vorrichtungseigenschaften (P) des Zielmonitoraufbaus (tms) für die empfangenen Anforderungen (R) geeignet sind, um Bilder und Anwendungsfenster der medizinischen Anwendung (A) korrekt anzuzeigen, um die Qualitätsanforderungen für klinische Anwendungen zu gewährleisten, und falls ja, Steuerinformationen (ci) zum Anpassen des Satzes von Elementen einer grafischen Benutzerschnittstelle für den Quellmonitoraufbau bereitzustellen, um einen angepassten Satz von Elementen einer grafischen Benutzerschnittstelle (el') für den Zielmonitoraufbau (tms) zu erzeugen, indem eine Laufzeitinstanz einer virtuellen Monitorkomponente (VM) für jeden Monitor oder für jede Anwendung im Quellmonitoraufbau (sms) erzeugt wird, wobei die virtuelle Monitorkomponente (VM) als Abfangfenster im Zielmonitoraufbau (tms) fungiert, so dass jeder der physischen Monitore (M) des Quellmonitoraufbaus (sms) auf eine virtuelle Monitorkomponente (VM) abgebildet wird, und wobei das Erzeugen der virtuellen Monitorkomponente (VM) das Berechnen eines angepassten Satzes von Konfigurationseigenschaften umfasst, ausgeführt durch Zurücksetzen oder Neueinstellen oder Überschreiben früherer Werte, die zum Anzeigen der angepassten Elemente einer grafischen Benutzerschnittstelle im Zielmonitoraufbau verwendet werden, und
wobei das Verfahren umkehrbar ist, so dass als Reaktion auf ein Umkehrsignal der Zielmonitoraufbau (tms) automatisch in den Quellmonitoraufbau (sms) zurück übertragen wird.

12. Computerprogramm mit Anweisungen zum Ausführen eines Verfahrens gemäß einem der vorstehenden Verfahrensansprüche, wenn das Programm auf einem Computer ausgeführt wird.

## Revendications

1. Procédé mis en œuvre par ordinateur d'adaptation automatique d'un ensemble d'éléments (el) graphiques d'interface utilisateur pour une application (A) médicale à utiliser dans une configuration (tms) moniteur cible, dans lequel l'ensemble d'éléments (el) graphiques d'interface utilisateur est produit pour une configuration (sms) moniteur source, dans lequel la configuration moniteur cible et la configuration moniteur source se rapportent à une configuration d'au moins un moniteur physique, qui est adressé par une application pour visualiser les éléments graphiques d'interface utilisateur de l'application, comprenant les stades :
- détection (S1) de propriétés (P) de dispositif physique de la configuration (tms) moniteur cible ;
- réception (S2) d'exigences (R) de l'application (A) médicale ;
- vérification (S3), si des propriétés (P) détectées de dispositif physique de la configuration (tms) moniteur cible conviennent aux exigences (R) reçues pour afficher des images et des fenêtres d'application de l'application (A) médicale correctement pour la sauvegarde d'exigences de qualité d'applications cliniques et si oui :
- adaptation (S4) de l'ensemble d'éléments (el) graphiques d'interface utilisateur de la configuration (sms) moniteur source, en créant un ensemble adapté d'éléments (el') graphiques d'interface utilisateur pour la configuration (tms) moniteur cible, en produisant une instance de temps d'utilisation d'un composant (VM) moniteur virtuel pour chaque moniteur ou pour chaque application dans la configuration (sms) moniteur source, dans lequel le composant (VM) moniteur virtuel agit en tant que fenêtre d'interception dans la configuration (tms) moniteur cible, de manière à ce que chacun des moniteurs (M) physiques de la configuration (sms) moniteur source soit mis en correspondance avec un composant (VM) moniteur virtuel, et dans lequel produire le composant moniteur virtuel comprend calculer un ensemble adapté de propriétés de configuration exécuté en refixant ou en fixant nouvellement ou en passant outre à des valeurs antérieures, qui sont utilisées pour afficher les éléments graphiques adaptés d'interface utilisateur dans la configuration moniteur cible, et dans lequel le procédé est réversible, de sorte qu'en réponse à un signal d'inversion, la configuration (tms) moniteur cible est retransférée automatiquement à la configuration (sms) moniteur source.

2. Procédé suivant l'une quelconque des revendications précédentes, dans lequel la configuration (sms) moniteur source et/ou la configuration (tms) moniteur cible peuvent comprendre un moniteur (M) unique ou de multiples moniteurs (M).

3. Procédé suivant l'une quelconque des revendications précédentes, dans lequel le procédé comprend en outre :
- exécution d'un algorithme de mise en correspondance d'impédance physique pour chacun des moniteurs cibles séparément en refixant les exigences (R) reçues de l'application (A) médicale au moyen d'un gestionnaire de dispositif noyau, dans lequel l'algorithme de mise en correspondance d'impédance physique sert de normalisation, de sorte que tous les paramètres de moniteur ont besoin d'être normalisés et ont besoin d'être maintenus constants avant de pouvoir adapter l'ensemble d'éléments graphiques d'interface utilisateur pour l'ensemble moniteur cible.

4. Procédé suivant l'une des revendications précédentes, dans lequel le procédé est lancé automatiquement, si un élément (el) graphique d'interface utilisateur ou une partie de celui-ci est transféré à un autre moniteur.

5. Procédé suivant l'une quelconque des revendications précédentes, dans lequel la dimension et/ou la position de chacun de l'ensemble adapté d'éléments (el') graphiques d'interface utilisateur est calculée dynamiquement et séparément, de manière à satisfaire des exigences (R) de qualité de présentation pour tout l'ensemble d'éléments (el') graphiques adaptés d'interface utilisateur sur la configuration (tms) moniteur cible.

6. Procédé suivant l'une quelconque des revendications précédentes, dans lequel les éléments (el') de l'ensemble adapté d'éléments graphiques d'interface utilisateur sont désactivés, alors que le transfert entre la configuration (sms) moniteur source et la configuration (tms) moniteur cible est exécutée.

7. Procédé suivant l'une quelconque des revendications précédentes, dans lequel une interface de sortie de l'application est redirigée sur le composant (VM) moniteur virtuel, qui, à son tour, fait que l'affichage physique est exécuté sur au moins un moniteur cible de la configuration (tms) moniteur cible.

8. Procédé suivant l'une quelconque des revendications précédentes, dans lequel, si au moins un élément (el) graphique d'interface utilisateur de la configuration (sms) moniteur source est adapté, alors tous les autres éléments graphiques d'interface utilisateur pour l'application (A) médicale sont évalués automatiquement comme étant adaptés aussi.

9. Procédé suivant l'une quelconque des revendications précédentes, dans lequel les propriétés (P) de dispositif physique de la configuration (tms) moniteur cible comprennent un nombre, une dimension, une résolution, un schéma de couleur, une mise à l'échelle.

10. Procédé suivant l'une quelconque des revendications précédentes, dans lequel la vérification exige un résultat d'essai positif pour chaque segment d'un élément graphique d'interface utilisateur et pour tous les éléments graphiques d'interface utilisateur de l'application concernant :
- un schéma de couleur, une résolution, une mise à l'échelle et/ou un contraste tel que requis par l'application.

11. Gestionnaire (300) de dispositif noyau pour l'adaptation automatique d'un ensemble d'éléments (el) graphiques d'interface utilisateur pour une application (A) médicale à au moins une configuration (tms) moniteur cible, dans lequel l'ensemble d'éléments (el) graphiques d'interface utilisateur a été produit pour une configuration (sms) moniteur source, dans lequel la configuration moniteur cible et la configuration moniteur source se rapportent à une configuration d'au moins un moniteur physique, qui est adressée par une application pour visualiser les éléments graphiques d'interface utilisateur de l'application, et dans lequel le gestionnaire (300) de dispositif noyau est conçu pour exécuter le procédé suivant l'une des revendications précédentes et comprend :
- une interface (310) de propriété, qui est configurée pour détecter des propriétés (P) de dispositif physique de la configuration (tms) moniteur cible ;
- une interface (320) d'exigence, qui est configurée pour recevoir des exigences (R) de l'application (A) médicale ;
- une unité (330) de traitement, qui est configurée pour vérifier si les propriétés (P) de dispositif physique détectées de la configuration (tms) moniteur cible conviennent aux exigences (R) reçues pour afficher des images et des fenêtres d'application de l'application (A) médicale correctement, afin de sauvegarder des exigences de qualité pour des applications cliniques et si oui, pour donner des instructions (ci) de commande pour adapter l'ensemble d'éléments graphiques d'interface utilisateur pour la configuration moniteur source, afin de créer un ensemble adapté d'éléments (el') graphiques d'interface utilisateur pour la configuration (tms) moniteur cible, en produisant une instance de temps d'utilisation d'un composant (VM) moniteur virtuel pour chaque moniteur ou pour chaque application dans la configuration (sms) moniteur source, dans lequel le composant (VM) moniteur virtuel agit en tant que fenêtre d'interception dans la configuration (tms) moniteur cible, de manière à ce que chacun des moniteurs (M) physiques de la configuration (sms) moniteur source soit mis en correspondance avec un composant (VM) moniteur virtuel, et dans lequel produire le composant (VM) moniteur virtuel comprend calculer un ensemble adapté de propriétés de configuration exécuté en refixant ou en fixant nouvellement ou en passant outre à des valeurs antérieures, qui sont utilisées pour afficher les éléments graphiques adaptés d'interface utilisateur dans la configuration moniteur cible, et
dans lequel le procédé est réversible, de sorte qu'en réponse à un signal d'inversion, la configuration (tms) moniteur cible est retransférée automatiquement en la configuration (sms) moniteur source.

12. Programme d'ordinateur ayant des instructions pour exécuter un procédé suivant l'une quelconque des revendications précédentes de procédé, si le programme est exécuté sur un ordinateur.
